# EUROPÄISCHE PATENTANMELDUNG

(11) **EP 4 495 192 A1**
(43) Veröffentlichungstag der Anmeldung: **22.01.2025**
(21) Anmeldenummer: 23186189.9
(22) Anmeldetag: 18.07.2023
(51) Int. Cl.: C09D 5/00, B05B 13/02, B05B 16/00

(54) **BESCHICHTETER LACKIERTRÄGER, VERFAHREN ZUR HERSTELLUNG UND VERWENDUNG DES LACKIERTRÄGERS**

(71) Anmelder: Colosol Coatings GmbH, 74906 Bad Rappenau (DE)
(72) Erfinder: Zbrodov, David, 74223 Flein (DE)
(74) Vertreter: Patentanwälte Olbricht Buchhold Keulertz

(57) **Zusammenfassung**

Gegenstand der Erfindung ist ein beschichteter Lackierträger umfassend einen Lackierträger und eine auf dem Lackierträger aufgebrachte Beschichtung, ein Verfahren zur Herstellung des beschichteten Lackierträgers und die Verwendung bei der Serien-Lackierung oder manuellen Lackierung. Die Erfindung betrifft einen beschichteten Lackierträger, der in Fertigungsprozessen der Lackierung und Beschichtung eingesetzt wird und vor einer permanenten Beschichtung durch den auf das Werkstücke aufgetragenen Lack geschützt werden sollen. Die Reinigung der Lackierträger erfolgt umweltschonend und ressourcenschonend. Durch die permanente Schutzbeschichtung werden die erfindungsgemäßen Lackierträger dauerhaft vor einer Beschichtung durch Lackanhaftungen geschützt. Die erfindungsgemäßen beschichteten Lackierträger lassen sich überraschenderweise selbst nach mehreren Lackierdurchgängen bei industriellen Erstausrüster-Beschichtungsprozesse effizient mechanisch reinigen.

## Beschreibung

Gegenstand der Erfindung ist ein beschichteter Lackierträger gemäß dem Oberbegriff von Anspruch 1, eine Verfahren zur Herstellung des beschichteten Lackierträgers und die Verwendung des beschichteten Lackierträgers bei Lackiervorgängen.

In der industriellen Fertigung, wie z.B. der Automobilserienproduktion, müssen viele Bauteile beschichtet d.h. lackiert werden. Während des Beschichtungsvorgangs werden vielfach Lackierträger eingesetzt. Die Lackierträger haben die Aufgabe, die zu beschichtenden Bauteile während des Beschichtungsprozesses zu tragen. Der Beschichtungsprozess kann eine klassische Spritzlackierung, aber auch eine elektrostatische Tauchlackierung oder ein anderer Beschichtungsprozess sein. In allen Fällen haben diese Prozesse gemeinsam, dass ein Bauteil, z. B. ein Fahrzeugbauteil, eine Fahrzeugkarosserie, oder ein allgemeines Produkt, wie bspw. ein Möbelstück oder ein Werkzeug, auf seiner Oberfläche, welche aus Metall, Kunststoff, Holz oder Glas bestehen kann, eine 1 K oder 2K Beschichtung erhält.

In manchen Fällen tragen die Lackierträger auch sogenannte Module oder Modulträger, auf welchen dann wiederrum das zu beschichtende Bauteil getragen wird. Diese Module werden häufig auch aus Kunststoffen wie ABS, PE oder PP gefertigt, können aber ebenso aus Metall bestehen. Im manuellen Lackierbereich nennt man die Lackierträger auch "Lackierständer".

Bei der kathodischen Elektrotauchlackierung (KTL), die insbesondere zur Grundierung von Fahrzeugkarosserien eingesetzt wird, werden die zu lackierenden Fahrzeugkarosserien auf Schlitten, sogenannte Skids, gesetzt und zusammen mit diesen auf einem Förderer durch ein mit dem aufzubringenden Lack gefülltes Tauchbecken geführt.

Beim Lackieren von Fahrzeugkarosserien, Fahrzeugbauteilen oder anderen Bauteilen oder Werkstücken kommt es unvermeidbar zu einer Verschmutzung der in der Lackieranlage eingesetzten Lackierträger durch Lackanhaftungen, Lacknebel, Lacktropfen oder Lackoverspray, der nicht nur wie gewünscht auf dem zu beschichtenden Werkstück, sondern auch auf den Lackierträgern haftet.

Die Lackanhaftungen bauen sich in Schichten auf dem Lackierträger ebenso wie auf den zu beschichtenden Bauteilen auf, insbesondere in angrenzenden Bereichen, bis diese mit (Lack-)-Schichten von zum Beispiel bis zu 15mm überzogen sind. Da die Passgenauigkeit der Lackierträger durch die entstehende Lackschicht nicht mehr gegeben ist, und sich die Qualität des Beschichtungsprozesses durch Verunreinigungen verschlechtert, werden die Teileträger nach einer bestimmten Anzahl von Lackierdurchläufen meist 50-300 Umläufe, je nach Schichtaufbau der Be-schichtung, einer Reinigung zugeführt.

Für die deshalb in regelmäßigen Abständen erforderliche Reinigung sind verschiedene Reinigungseinrichtung und Reinigungsverfahren bekannt, die jedoch mit einigen Nachteilen verbunden sind. Nach aktuellem Stand der Technik werden hauptsächlich drei Methoden eingesetzt, welche allerdings nur die Komponenten aus Metall betreffen. Die Komponenten aus Kunststoff werden entsorgt und ersetzt bzw. einem Recycling zugeführt.
1. Chemische Reinigung/Entlackung: Bei dieser Methode werden chemische Lösungsmittel eingesetzt, um die Lackschicht zu lösen. Diese Lösungsmittel können sowohl organische als auch anorganische Verbindungen sein, die auf den Lack aufgetragen werden oder in welche die zu entlackenden Teile eingetaucht werden (sog. Entlackungsbad), um die Bindungen zwischen der Lackschicht und der darunter liegenden Oberfläche zu brechen. Einmal gelöst, kann der Lack dann entfernt werden. Ein Nachteil dieser Methode ist, dass viele der verwendeten Chemikalien potenziell schädlich sind und ordnungsgemäß entsorgt werden müssen, um Umweltschäden zu vermeiden. Zudem ist diese Methode zeitintensiv, da die Lösemittel eine Einwirkzeit benötigen.
2. Thermische Reinigung/Entlackung: Bei dieser Methode wird Wärme verwendet, um den Lack zu entfernen. Dies geschieht durch Erhitzen des Lacks bis zu einem Punkt, an dem er verbrennt oder abblättert. Diese Methode wird häufig in industriellen Anwendungen verwendet, da sie sehr effizient ist und große Flächen schnell entlackt werden können. Ein Nachteil dieser Methode ist jedoch, dass sie zu Oberflächenschäden führen kann, insbesondere wenn die Temperatur zu hoch ist oder die Wärmebehandlung zu lange dauert. Besonders im Falle von filigranen Teileträgern, welche sich durch die Wärmeeinwirkung verziehen, sodass die Teile nicht mehr passen. Kunststoffteile können auf diese Art nicht entlackt werden. Zudem ist diese Methode sehr energieintensiv, da die Temperaturen bis zu 800°C erreichen müssen.
3. Mechanische Reinigung/Entlackung: Diese Methode umfasst verschiedene Techniken wie Schleifen, Strahlen (mit Sand, Glas oder Kunststoffpartikeln) oder Bürsten, um die Lackschicht physisch von der Oberfläche zu entfernen. Dieses ist eine effektive, aber ineffiziente Methode zur Entfernung von Lacken, insbesondere von schwer zugänglichen Stellen. Ein weiterer Nachteil dieser Methode ist, dass sie die darunter liegende Oberfläche beschädigen kann, insbesondere wenn die Methode zu aggressiv angewendet wird. Darüber hinaus kann es zeitaufwendig sein und erfordert möglicherweise spezielle Ausrüstung. Für die Entlackung einer großen Anzahl an komplex geformten Trägern ist diese Methode daher nicht geeignet.

DE 203 6 044 U1 beschreibt eine Kunststoffbeschichtung die als Trennmittel auf die Lackierträger aufgetragen wird. Diese Kunststoffbeschichtung wird als Opferschicht bei der mechanischen Reinigung mit entfernt und soll so die Effizienz der mechanischen Reinigung erhöhen. Nachteil der Methode ist, dass die Kunststoffbeschichtung nach jedem Reinigungsvorgang neu aufgetragen werden muss.

Aufgabe der Erfindung ist es daher einen Lackierträger und ein Verfahren zu dessen Herstellung bereitzustellen, der die vorstehenden Nachteile überwindet und insbesondere eine kostengünstige und effiziente Reinigung des Lackierträgers ermöglicht, eine Reinigung ohne Beschädigung oder Veränderung des Lackierträgers erlaubt und auch für Lackierträger aus Kunststoff anwendbar ist.

Die Aufgabe wird erfindungsgemäß gelöst durch einen beschichteten Lackierträger gemäß Patentanspruch 1. Weiterhin wird die Aufgabe gelöst durch ein Verfahren zur Herstellung eines beschichteten Lackierträgers gemäß Patentanspruch 10 und einer Verwendung gemäß Patentanspruch 16.

Weitere Ausführungsformen sind Gegenstand der Unteransprüche oder nachfolgend beschrieben.

Der erfindungsgemäße beschichtete Lackierträger umfasst einen Lackierträger und eine auf dem Lackierträger aufgebrachte Beschichtung. Die auf dem Lackierträger aufgebrachte Be-schichtung ist eine permanente Schutzbeschichtung, die dauerhaft mit der Oberfläche des Lackierträgers verbunden ist und die gegen mechanische Reinigungsverfahren beständig ist.

Unter einer Permanentbeschichtung auch als Permanent-Lack bezeichnet, wird erfindungsgemäß eine Beschichtung verstanden, die dauerhaft auf der Oberfläche haftet und beim Entfernen von Lackanhaftungen und Lackier-Verunreinigungen nicht mitentfernt wird. Im Gegensatz dazu sind reversible Beschichtungen, auch als "Opferschichten" bezeichnet, Beschichtungen, die nicht permanent haften und beim Entfernen der Lackanhaftungen oder Verunreinigungen mitentfernt werden.

Lackierträger werden auch als Teileträger, Baugruppenträger oder auch Warenträger bezeichnet, in der Fachsprache werden diese Träger bei der Fahrzeugserienfertigung auch als Schlitten oder meist als Lackierskids bezeichnet. Auch Bauteile in einer Lackierstraße, Lackieranlage oder Lackierkabine auf denen Bauteile, Werkstücke oder Lackierwerkzeuge angebracht werden, werden erfindungsgemäß als Lackierträger bezeichnet.

Der erfindungsgemäße Lackierträger ist bevorzugt aus einem oder mehreren metallischen Werkstoffen, und/oder aus Kunststoff gebildet. Besonders bevorzugt ist der Lackierträger aus aus Stahl, Edelstahl, Aluminium, Acrylnitril-Butadien-Styrol-Copolymeren (ABS), Polyethylen (PE) oder Polypropylen (PP) oder eine Kombination von Metall und Kunststoff, z.B. einem Metalluntergestell mit darauf angeordneten Kunststoffträgern.

Bevorzugt umfasst die permanente Schutzbeschichtung auf dem beschichteten Lackierträger
- mindestens einen Filmbildner und
- mindestens ein Antihaft-Additiv.

Das Antihaft-Additiv ist bevorzugt ein Wachsadditiv, ein Weichmacher, ein silikonmodifiziertes Polyacrylat oder eine Mischung hiervon, besonders bevorzugt ein Wachsadditiv, eine Mischung von Wachsadditiv und Weichmacher oder eine Mischung von Wachsadditiv, silikonmodifiziertem Polyacrylat und Weichmacher. Die Antihaftwirkung des Additivs in der Beschichtung kann auf verschiedenen Effekten basieren.

Das Wachsadditiv ist bevorzugt in einer Konzentration von 5 bis 25 Gew.-%, bevorzugt 15 bis 25 Gew.-%, besonders bevorzugt 18 bis 25 Gew.-%, in der Schutzbeschichtung enthalten bezogen auf die Gesamtmenge der Schutzbeschichtung vor dem Auftrag auf den Lackierträger und dem Aushärten auf dem Lackierträger. In anderen, vor allem niedrigeren Konzentrationen kann das Wachsadditiv zu anderen Effekten, beispielsweise einer Mattierung oder einem Soft-Feel-Effekt, führen.

In einer Ausführungsform ist das Wachsadditiv ein Wachsadditiv mit einem Schmelzpunkt von > 125°C ist, bevorzugt ein synthetisches Wachsadditiv ausgewählt aus Polyethylenwachsen, oxidierten Polyethylenwachsen, polypropylen-modifizierten Polyethylenwachsen, amid-modifizierten Polyethylenwachsen und Polytetrafluoroethylen-modifiziertes Polyethylenwachs.

Geeignete Wachsadditive sind beispielsweise nicht-ionische Emulsion von oxidierten HD-Polyethylenwachsen, auch als C16-C18-Alkohole bezeichne (CAS-Nr. 68439-49-6), Dispersionen von Hochdruck-(HD)-Polyethylenwachsen (englisch: HDPE, high density polyethylene), mikronisierte amid-modifiziertes Polyethylenwachse, mikronisierte Polypropylen-modifizierte Polyethylen-Wachse, homopolymere Polytetrafluoroethylene oder Mischungen hiervon. Als Polyethylenwachs wird Polyethylen mit einer niedrigen molaren Masse im Bereich von etwa 2.000-20.000 g/mol (Massenmittel) bezeichnet, das wegen der niedrigen Molmasse eine wachsartige Konsistenz hat. Als mikronisiertes Wachs, wird Wachs bezeichnet das mechanisch in Partikel von wenigen Mikrometern Größe zerrieben wurde und z.B. Partikelgrößen von 4 bis 80 Mikron hat. Als Dispersion eines Polyethylenwachses wird ein in einer Flüssigkeit, d.h. Wasser oder organischem Lösemittel dispergiertes Wachs bezeichnet.

In den Wachsadditiven liegen die Wachspartikel fein verteilt in einer flüssigen Phase (Wasser oder organische Lösemittel) vor oder als mikronisierte Wachse in Pulverform. Wachsadditive basieren häufig allein auf einer Wachsart, können aber auch Mischungen verschiedener Wachse enthalten.

Das silikonmodifizierte Polyacrylat ist ein silikonhaltiges Oberflächenadditiv für lösemittelhaltige Lacksysteme. Das silikonmodifizierte Polyacrylat ist bevorzugt OH-funktionell, d.h. es enthält Hydroxy-Gruppen. Dieses Additiv wird auch als Additiv mit Reinigungsfunktion bezeichnet, weil es einen Easy-to-Clean Effekt, d.h. eine leichte Reinigung, begünstigt und die Anhaftung von Verunreinigungen erschwert.

Filmbildner, häufig auch als Bindemittel bezeichnet, sind Polymere oder polymerisierende Oligomere organisch-chemischer Natur. Der Filmbildner bildet einen zusammenhängenden auf dem Untergrund haftenden Lackfilm aus.

Der Filmbildner ist erfindungsgemäß bevorzugt ausgewählt aus der Gruppe bestehend aus
- gesättigten Polyestern, insbesondere Polyestern auf Basis von Dicarbonsäuren und Dialkoholen, die mit Polyisocyanaten oder Aminoharzen vernetzt werden,
- Ungesättigten Polyestern aus Diolen mit ungesättigten Dicarbonsäuren,
- Polyacrylaten auch als Acrylharze bezeichnet, umfassend Reinacrylate mit nur einer Sorte Acrylmonomer und Coplymerisate,
- Alkydharzen, mit Fettsäuren oder höheren Carbonsäuren modifizierte Polyester
- Phenolharzen,
- Melaminharzen,
- Epoxidharzen, Verbindungen mit mindestens zwei Epoxid-Gruppen im Molekül
- Polyurethanen, und
- Mischungen hiervon,
bevorzugt ausgewählt aus Acrylharzen, Alkydharzen, Phenol-Formaldehydharzen, Epoxidharzen und Polyurethanharzen. Alle Filmbilder können als Einkomponenten-Systeme oder 2-Komponetent-Systeme vorliegen. Die Einkomponentensysteme sind physikalisch vernetzend und die Zweikomponentensysteme chemisch vernetzend.

Die Filmbildner können je nach Anwendungsbereich lösemittelbasiert, wasserbasiert, Pulverlack-Filmbildner ohne Lösemittel oder sogenannte lösemittelfreie 100%-System sein. Die Auswahl der Filmbildners findet nach Kriterien des späteren Einsatzes statt, wie zum Beispiel die Haftung auf einem bestimmten Substrat (z.B. Stahl), den Einsatzbedingungen (z.B. Ofentrocknung) und angestrebten Resistenz gegen die weiteren Beschichtungsmaterialien (z.B. Lösemittel).

Bevorzugt ist der Filmbildner ein thermoplastisches Acrylharz, bevorzugt ein nichtvernetzendes Acrylharz. Als thermoplastisches Acrylpolymerisat können verwendet werden Ester der Acrylsäure oder Methacrylsäure oder Copolymerisat eines solchen Esters mit einen anderen copolymerisierbaren Monomeren. Geeignete thermoplastische Acrylharze sind u.a. Homopolymere von Methylmethacrylat oder Butylmethacrylate und Copolymere von z.B. Methylmethacrylat, Styrol, Butylacrylat, Hydroxyethylacrylat, Iso-butylmethacrylat, n-Butylmethacrylat, Methacrylsäure und Propylenoxid. Weiter geeignet sind die Ester der Säuren mit Alkoholen, die etwa 1 bis 16 Kohlenstoffatome enthalten, beispielsweise Methylacrylat, Methylmethacrylat, Ethylacrylat, Butylacrylat, n-Butylmethacrylat, 1-Methylheptylacrylat, Methacrylsäuredodecylester, Stearylmethacrylat, Stearylmethacrylat und 2-Ethoxyethylmethacrylat.

Besonders bevorzugt ist der Filmbildner ein lösemittelbasiertes thermoplastisches Acrylharz.

Die permanente Schutzbeschichtung enthält in einer Ausführungsform mindestens einen Weichmacher. Geeignete Weichmacher, sind beispielsweise Carbonsäureester wie Phthalate, insbesondere Diisononylphthalat (DINP), Diisodecylphthalat (DIDP) oder Di(2-pro- pyl-heptyl)phthalat (DPFIP), hydrierte Phthalate, insbesondere hydriertes Diisononylphthalat bzw. Diisononyl-1 ,2-cyclohexandicarboxylat (DINCFI), Terephthalate, insbesondere Bis(2-ethylhexyl)terephthalat oder Diisononylterephthalat, hydrierte Terephthalate, insbesondere hydriertes Bis(2-ethylhexyl)terephthalat oder Diisononylterephthalat bzw. Bis(2-ethylhexyl)-1 ,4-cyclohexandicarboxylat, Trimellitate, Adipate, insbesondere Dioctyladipat, Azelate, Sebacate, Benzoate, Citrate, Glykolether, Glykolester, organische Phosphor- oder Sulfonsäureester, Polybutene, Polyisobutene oder von natürlichen Fetten oder Ölen ab geleitete Weichmacher. Wenn die Schutzbeschichtung durch einen Weichmacher elastifiziert ist, wird eine unterstützende mechanische Funktion durch Vibration und Verformung erzeugt. Beim Auftreffen des Dampf- oder Trockeneistrahls wird die Beschichtung in Schwingung versetzt und leicht verformt. Dadurch platzen die spröde Lackschichten aus Lackanhaftungen einfacher von dieser wieder ab. In dieser Form kann ein Weichmacher als Antihaft-Additiv eingesetzt werden.

Zusätzlich zu Filmbildner, Antihaft-Additiv und ggf. Lösemittel kann die Schutzbeschichtung weitere Additive enthalten. Geeignete Additive sind z.B.
Stabilisatoren, wie UV- und Thermostabilisatoren, Co-Löser, Filmbildehilfsmittel, Rheologieadditive, Netzmittel, Entschäumer, Konservierungsmittel und Emulgatoren.
Die Schutzbeschichtung kann außerdem Füllstoffe und oder Pigmente enthalten. Beispielsweise können der Schutzbeschichtung Weißpigmente zugegeben werden, so dass die beschichteten Lackierträger eine weiße Oberfläche haben und die Reinigung optisch leichter überprüfbar ist.

Die permanente Schutzbeschichtung hat vor dem Auftragen auf den Lackierträger beispielsweise folgende Zusammensetzung

| | |
|---|---|
| 25 - 50 Gew. % | Filmbildner, bevorzugt thermoplastisches Acrylharz, |
| 25 - 50 Gew.-% | Lösemittel, |
| 5 - 10 Gew.-% | Wachsadditiv und |
| 5 - 10 Gew.-% | Weichmacher. |

In einer bevorzugten Ausführungsform ist die permanente Schutzbeschichtung lösemittelbasiert und ist als Schutzbeschichtung mit Antihaft-Funktion auf Lackierträger aus Metall und Lackierträger aus ABS-Kunststoff aufgebracht.

Die permanente Schutzbeschichtung bildet eine sehr stark haftende Schicht auf dem Lackierträger mit einer Antihaft-Funktion, wodurch die Lackschichten aus Überlackierung und Overspray zwar eine Haftung auf der Schutzbeschichtung des Lackierträgers aufbauen, diese aber so schwach ist, dass die Lackschichten aus Überlackierung und Overspray mechanisch entfernt werden können, während die Schutzbeschichtung selbst erhalten bleibt. Der mechanische Reinigungsprozess kann mehrfach bis unbegrenzt wiederholt werden, solange die Schutzbeschichtung ihre Funktion beibehält.

Die Erfindung betrifft einen beschichteten Lackierträger, der in Fertigungsprozessen der Lackierung und Beschichtung eingesetzt wird und vor einer permanenten Beschichtung durch den auf das Werkstücke aufgetragenen Lack geschützt werden sollen. Es wird eine permanente Trennschicht auf den Lackierträgern erzeugt, sodass die im Beschichtungsvorgang entstehende Lackschicht (Lackanhaftung), von den Lackierträgern mechanisch wieder entfernt werden kann. Die Reinigung der Lackierträger erfolgt umweltschonend und ressourcenschonend. So wird beispielsweise bei einer bevorzugten Reinigungsvariante mit einem Wasser-Hochdruckstrahls das verwendete Wasser nicht kontaminiert. Daher kann es einer Reinigung bzw. einem Recycling zur erneuten Verwendung für das Reinigungsverfahren zugeführt werden. Durch die permanente Schutzbeschichtung werden die erfindungsgemäßen Lackierträger dauerhaft vor einer Beschichtung durch Lackanhaftungen geschützt.

Die erfindungsgemäßen beschichteten Lackierträger lassen sich überraschenderweise selbst nach mehreren Lackierdurchgängen bei industriellen Erstausrüster-Beschichtungsprozesse (englisch OEM, Original equiment manufacturer) effizient mechanisch reinigen. Selbst erfindungsgemäß beschichte Lackierträger, die bei der kathodische Tauchlackierung (KTL) eingesetzt werden, können nach wiederholten Beschichtungsvorgängen von 50 bis 30 Lackierdurchgängen problemlos mechanisch gereinigt werden. Bei diesem Beschichtungsprozess wird die Kraftfahrzeugkarosserie auf dem beschichteten Lackierträger befestig und mit diesem gemeinsam in das Tauchbad getaucht. Der Beschichtungsprozess für das auf dem beschichteten Lackierträger befestigte Bauteil kann eine klassische Spritzlackierung, eine elektrostatische Tauchlackierung wie KTL/ATL, eine Pulverbeschichtung oder ein anderer Beschichtungsprozess sein.

Allen diesen industriellen Beschichtungsprozessen ist gemeinsam, dass die auf der Oberfläche aufgetragenen Lackanhaftungen meist geschlossene, vernetzte Schichten bilden, vielfach ofengetrocknet und in die Oberfläche eingebrannt sind, insbesondere bei 2K-OEM-Automobillacken. Zudem handelt es sich um mehrere Schichten übereinander, die entfernt werden müssen.

Die erfindungsgemäß beschichteten Lackierträger können einfach und kostengünstig mechanisch gereinigt werden. Die mechanische Reinigung erfolgt z.B. mittels eines Hochdruckreiniger mit Fräßaufsatz. Auch der Einsatz eines Hochdruck-Wasserstrahl, eines Dampfstrahls oder eines Trockeneisstrahl ist möglich. Die Lackanhaftungen, die Schichten aus Overspray und vollständiger Überlackierung lassen sich mechanisch von der Oberfläche lösen. Die permanente Antihaft-Schutzbeschichtung bleibt erhalten und kann erneut überlackiert werden.

Es hat sich gezeigt, dass die beschichteten Lackierträger auch nach mehr als 120 Lackierumläufen, selbst bei Einbrennlacken, problemlos mechanisch Reinigen lassen. Abhängig von der Schichtdicke der aufgetragenen Lackanhaftungen sind auch 150 Lackierumläufe vor einer mechanischen Reinigung möglich. Die permanente Schutzbeschichtung auf dem Lackierträger bleibt selbst bei 3, 5, 10 oder mehr Reinigungsvorgängen erhalten. Die Lackierträger sind somit schneller wieder einsatzbereit und die mechanische Reinigung ist kostengünstiger als eine chemische Reinigung. Auch kann bei filigranen Lackierträgern die bei der thermischen Reinigung häufig auftretende Verformung vermieden werden. Durch die Schutzbeschichtung ist es zudem möglich auch Lackierträger auf Kunststoffbasis zu reinigen, die nicht thermisch oder chemisch gereinigt werden können. Zusätzlich entfallen gegenüber dem Einsatz herkömmlicher Lackierträger in entsprechender Stückzahl die Rüstkosten, (Zwischen-)Lagerkosten, Transportkosten, sowie Kosten für Instandsetzung der Lackierträger. Hinsichtlich der Lackiermodule aus ABS wird das Recyclen und Ersetzen ebenfalls reduziert.

Die erfindungsgemäßen beschichteten Lackierträger können auch 20 Reinigungszyklen bestehen. Bei ca. 150 Lackierumläufen bis zur Reinigung, müssen die Lackierträger somit erst nach rund 3.000 Lackierumläufen entlackt, d.h. von der permanenten Schutzbeschichtung befreit und erneut beschichtet werden, also z.B. 1-mal pro Jahr.

Weiterhin ist Gegenstand der Erfindung ein Verfahren zur Herstellung eines beschichteten Lackierträgers umfassend die Schritte
- Bereitstellen eines Lackierträgers,
- Aufbringen einer permanenten Schutzbeschichtung auf den Lackierträger, wobei die Schutzbeschichtung umfasst
   o mindestens einen Filmbildner und
   o mindestens ein Antihaft-Additiv,
wobei die auf dem Lackierträger aufgebrachte Beschichtung eine permanente Schutzbeschichtung ist, die dauerhaft mit der Oberfläche des Lackierträgers verbunden ist und die gegen mechanische Reinigungsverfahren beständig ist.

Das Aufbringen der Schutzbeschichtung erfolgt bevorzugt durch ein Tauchverfahren, Streichverfahren oder Spritzverfahren, besonders bevorzugt durch ein Tauchverfahren, wobei das Verfahren sowohl manuell als auch teilautomatisch oder vollautomatisch erfolgen kann. Bei einem Auftrag im Spritzverfahren werden bevorzugt mindestens 2 Schichten aufgetragen. Bei einer Beschichtung im Tauchverfahren oder Streichverfahren wird bevorzugt eine Schicht aufgetragen. Bevorzugt ist die im Verfahren aufgetragene permanente Schutzbeschichtung lösemittebasiert und der Lackierträger aus Metall oder ABS.

Bei dem erfindungsgemäßen Verfahren kann in einem weiteren Verfahrensschritt vor dem Auftragen der permanenten Schutzbeschichtung die Oberfläche des Lackierträger angeraut werden. Wenn der Untergrund rau ist, d.h. die Oberfläche des Lackierträgers rau ist, haftet die permanente Schutzbeschichtung fester auf der Oberfläche und es wird vermieden, dass die Be-schichtung stellenweise bei der Reinigung mit abgetragen wird. Bei neuen, noch unbenutzten Lackierträger kann es deshalb notwendig sein, die Oberfläche des Lackierträgers anzurauen. So können z.B. neue Lackierträger oder Lackiermodule aus Edelstahl vor der Tauchbeschichtung durch (Sand-)strahlen angeraut werden. Bei Lackierträgern aus Stahl oder Kunststoff ist dieses nicht notwendig. Bei bereits benutzten Lackierträgern ist die Beschichtung direkt nach der Entlackung möglich, da das Metall dadurch bereits angeraut ist.

Die im Verfahren aufgebrachte Schutzbeschichtung enthält bevorzugt als Antihaft-Additiv ein Wachsadditiv, ein Weichmacher, ein silikonmodifiziertes Polyacrylat oder eine Mischung hiervon ist, besonders bevorzugt ein Wachsadditiv oder eine Mischung von Wachsadditiv und Weichmacher. Das Wachsadditiv ist bevorzugt ein Wachsadditiv mit einem Schmelzpunkt von > 125°C ist, bevorzugt ein synthetisches Wachsadditiv ausgewählt aus Polyethylenwachsen, oxidierten Polyethylenwachsen, polypropylen-modifizierten Polyethylenwachsen, amid-modifizierten Polyethylenwachsen und Polytetrafluoroethylen-modifiziertes Polyethylenwachs.

Der im erfindungsgemäß Verfahren beschichtete Lackierträger ist bevorzugt aus einem oder mehreren metallischen Werkstoffen, und/oder aus Kunststoff gebildet. Bevorzugt ist der Lackierträger aus Stahl, Edelstahl, Aluminium, Acrylnitril-Butadien-Styrol-Copolymeren (ABS), Polyethylen (PE) oder Polypropylen (PP) oder aus einem metallischen Werkstoff mit aufgesetzten Kunststoffträgern.

In einer Ausführungsform werden im erfindungsgemäß Verfahren erfindungsgemäße beschichtete Lackierträger hergestellt wie vorstehend beschrieben. Die im erfindungsgemäß Verfahren aufgebrachte permanente Schutzbeschichtung kann, der für den erfindungsgemäß beschichtenden Lackierträger beschriebenen Schutzbeschichtung entsprechen.

Gegenstand der Erfindung ist weiterhin die Verwendung eines beschichteten Lackierträgers gemäß einem der Patentansprüche 1 bis 8 oder eines gemäß dem Verfahren nach den Ansprüchen 9 bis 14 hergestellten beschichteten Lackierträgers in einer Lackierstraße, Lackieranlage oder Lackieranlage, besonders bei der Serienfertigung von OEM-Bauteilen oder Fahrzeugen, bevorzugt zur Halterung von Bauteilen während des Lackiervorgangs, insbesondere zur Halterung von Bauteilen.

Bevorzugt wird der der beschichtete Lackierträger bei der Verwendung nach mindestens einem Lackiervorgang, bevorzugt nach mindestens 15 Lackiervorgängen, einem mechanischen Reinigungsschritt unterzogen wird.

Die mechanische Reinigung erfolgt dabei z.B. mittels eines Hochdruckreiniger mit Fräße, einem Hochdruck-Wasserstrahler, einem Dampfstrahler oder einem Trockeneisstrahler.

### Beispiele

### Beispiel 1

Es wurde eine lösemittelhaltige permanente Schutzbeschichtung mit folgender Zusammensetzung hergestellt:

| Anteil [Gew.-%] | Komponente | Produktname | |
|---|---|---|---|
| 52 Gew. % | Lösemittelbasiertes thermoplastisches Acrylharz | SETALUX^{®}17-1275¹ | Bindemittel |
| 30 Gew.-% | Xylol / Butylacetat - Gemisch (3:1) | | Lösemittel |
| 10 Gew.-% | Mikronisiertes Polypropylenwachs | CERAFLOUR 913² | Wachs |
| 8 Gew.-% | Diisononyl-Phthalat | Jayflex DINP³ | Weichmacher |

| | | | |
|---|---|---|---|
| ¹ Produkt der Firma Allnex ² Produkt der Firma Byk ³ Produkt der Firma ExxonMobil | | | |

### Beispiel 2

Es wurden 5 Lackierträger bestehend aus Grundrahmen und Modulen im Tauchverfahren beschichtet. Dazu wurde eine Tauchwanne mit ca. 60L permanenter Schutzbeschichtung bis zu einer Flüssigkeitshöhe von ca. 5cm Pegel befüllt und die Lackierträger anschließend eingetaucht, abgetropft und luftgetrocknet. Nach ca. 45 Minuten war die Beschichtung staubtrocken. Die Schichtstärkenmessung wies eine Trockenschichtstäke der Schutzbeschichtung von 80-100my auf.

### Beispiel 3

Die gemäß Beispiel 2 beschichteten Lackierträger wurden in einer Lackieranlage für Exterieur-Anbauteile und einer Lackieranlage für Karrosserieteile eingesetzt. Die Lackierträger wurden jeweils nach mehreren Durchläufen mechanisch gereinigt.

In der Lackieranlage für Exterieur-Anbauteile wurde ein 2K-Polyurethan-Decklack im Einschichtverfahren aufgetragen und in 30 min. im Ofen bei 80°C ausgehärtet.
In der Lackieranlage für Karosserieteile, z.B. Stoßstangen erfolgte ein vollständiger Lackaufbau. Im ersten Schritt wurde ein lösemittelbasierter 2K-PU-Primer aufgetragen, gefolgt vom Auftrag eines wasserbasierenden 1K-Decklacks und zum Abschluss wurde ein lösemittelbasierter 2K-Klarlack aufgetragen. Zwischen jeder Schicht wurde für 30 min. im Ofen bei 80°C getrocknet.

### Test 1 in 1-Schicht Lackieranlage für Exterieur-Anbauteile:

Die Lackierträger durchliefen 133 Lackierumläufen. Danach erfolgte eine mechanische Reinigung mittels Dampfstrahl 160 bar 60°C. Die Reinigungszeit betrug etwa 5 min. pro Lackierträger. Optisch konnten nach Reinigen von Lackanhaftungen und Lackresten keine Beschädigung der Schutzbeschichtung am Lackierträger festgestellt werden. Fazit: Den Reinigungszyklus hat die Schutzbeschichtung erfolgreich überstanden

### Test 2 in 1-Schicht Lackieranlage für Exterieur-Anbauteile:

Bei einem weiteren Test wurden die Lackierträger 145 Lackierumläufen unterzogen. Auch hier wurde eine gute mechanische Reinigung ohne Beschädigung der Schutzbeschichtung erzielt.

Es hat sich gezeigt, dass sich die Überbeschichtung d.h. die Lackanhaftungen leichter anlösen ließen, je stärker die darüberliegende Schichtstärke war. Die Reinigungsgrenze lag bei ca. 3000my. Ein sehr gutes Reinigungsergebnis wurde mehrmals mit ca. 150 Umläufen entsprechend einer Schichtstärke von etwa 1500my erzielt.

### Test 3 in 1-Schicht Lackieranlage für Exterieur-Anbauteile:

Die Lackierträger durchliefen 156 Lackierumläufen. Danach erfolgte eine mechanische Reinigung mittels Trockeneis-Strahler bei 8 bar. Die optische Prüfung ergab, dass die Schutzbeschichtung die Trockeneis-Reinigung unbeschädigt überstanden hat.

### Test 4 in 3-Schicht Lackieranlage für Karosserie-Anbauteile:

Bei einem weiteren Test wurden die Lackierträger 55 vollständigen Lackierumläufen im 3-Schicht-Verfahren aus Primer, Decklack und Klarlack unterzogen. Auch hier wurde eine gute und zügige mechanische Reinigung ohne Beschädigung der Schutzbeschichtung erzielt.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Beschichteter Lackierträger umfassend einen Lackierträger und eine auf dem Lackierträger aufgebrachte Beschichtung, **dadurch gekennzeichnet, dass** die auf dem Lackierträger aufgebrachte Beschichtung eine permanente Schutzbeschichtung ist, die dauerhaft mit der Oberfläche des Lackierträgers verbunden ist und die gegen mechanische Reinigungsverfahren beständig ist.

2. Lackierträger gemäß Patentanspruch 1, **dadurch gekennzeichnet, dass** die permanente Schutzbeschichtung umfasst
- mindestens einen Filmbildner und
- mindestens ein Antihaft-Additiv.

3. Lackierträger gemäß Patentanspruch 1 oder 2, **dadurch gekennzeichnet, dass** das Antihaft-Additiv ein Wachsadditiv, ein Weichmacher, ein silikonmodifiziertes Polyacrylat oder eine Mischung hiervon ist, bevorzugt ein Wachsadditiv, ein silikonmodifiziertes Polyacrylat oder eine Mischung von Wachsadditiv und Weichmacher.

4. Lackierträger gemäß Patentanspruch 3, **dadurch gekennzeichnet, dass** das Wachsadditiv in einer Konzentration von 5 bis 25 Gew.-%, bevorzugt 15 bis 25 Gew.-%, in der Schutzbeschichtung enthalten ist bezogen auf die Gesamtmenge der Schutzbeschichtung.

5. Lackierträger gemäß einem der Patentansprüche 3 oder 4, **dadurch gekennzeichnet, dass** Wachsadditiv ein Wachsadditiv mit einem Schmelzpunkt von > 125°C ist, bevorzugt ein synthetisches Wachsadditiv ausgewählt aus Polyethylenwachsen, oxidierten Polyethylenwachsen, polypropylenmodifizierten Polyethylenwachsen, amidmodifizierten Polyethylenwachsen und Polytetrafluoroethylen-modifiziertes Polyethylenwachs.

6. Lackierträger gemäß einem der vorhergehenden Patentansprüche, **dadurch gekennzeichnet, dass** der Filmbildner ausgewählt ist aus der Gruppe bestehend aus
• gesättigten Polyestern, insbesondere Polyester auf Basis von Dicarbonsäuren und Dialkoholen, die mit Polyisocynaten oder Aminoharzen vernetzt werden,
• ungesättigten Polyestern aus Diolen mit ungesättigten Dicarbonsäuren,
• Polyacrylaten,
• Alkydharzen,
• Phenolharzen,
• Melaminharzen,
• Epoxidharzen,
• Polyurethanen und
• Mischungen hiervon,
bevorzugt ausgewählt aus Acrylharzen, Alkydharzen, Phenol-Formaldehydharzen, Epoxidharzen und Polyurethanharzen, besonders bevorzugt ist der Filmbildner ein thermoplastisches Acrylharz.

7. Lackierträger gemäß einem der vorhergehenden Patentansprüche, **dadurch gekennzeichnet, dass** das Bindemittel zusätzlich ein Additiv, das eine Reinigungsfunktion hat, enthält, bevorzugt ein OH-funktionelles, silikonmodifiziertes Polyacrylat.

8. Lackierträger gemäß einem der vorhergehenden Patentansprüche, **dadurch gekennzeichnet, dass** der Lackierträger aus einem oder mehreren metallischen Werkstoffen, und/oder aus Kunststoff gebildet ist, bevorzugt ausgewählt aus Stahl, Edelstahl, Aluminium, Acrylnitril-Butadien-Styrol-Copolymeren (ABS), Polyethylen (PE) oder Polypropylen (PP).

9. Verfahren zur Herstellung eines beschichteten Lackierträgers umfassend die Schritte
• Bereitstellen eines Lackierträgers,
• Aufbringen einer permanenten Schutzbeschichtung auf den Lackierträger, wobei die Schutzbeschichtung umfasst
∘ mindestens einen Filmbildner und
∘ mindestens ein Antihaft-Additiv,
wobei die auf dem Lackierträger aufgebrachte Beschichtung eine permanente Schutzbeschichtung ist, die dauerhaft mit der Oberfläche des Lackierträgers verbunden ist und die gegen mechanische Reinigungsverfahren beständig ist.

10. Verfahren gemäß Patentanspruch 9, **dadurch gekennzeichnet, dass** das Aufbringen der Schutzbeschichtung durch ein Tauchverfahren, Streichverfahren oder Spritzverfahren erfolgt, bevorzugt durch ein Tauchverfahren, wobei das Verfahren sowohl manuell als auch teilautomatisch oder vollautomatisch erfolgt.

11. Verfahren gemäß Patentanspruch 9 oder 10, **dadurch gekennzeichnet, dass** das Antihaft-Additiv ein Wachsadditiv, ein Weichmacher, ein silikonmodifiziertes Polyacrylat oder eine Mischung hiervon ist, bevorzugt ein Wachsadditiv oder eine Mischung von Wachsadditiv und Weichmacher.

12. Verfahren gemäß einem der Patentansprüche 9 bis 11, **dadurch gekennzeichnet, dass** das Wachsadditiv ein Wachsadditiv mit einem Schmelzpunkt von > 125°C ist, bevorzugt ein synthetisches Wachsadditiv ausgewählt aus Polyethylenwachsen, oxidierten Polyethylenwachsen, polypropylenmodifizierten Polyethylenwachsen, amidmodifizierten Polyethylenwachsen und Polytetrafluoroethylen-modifiziertes Polyethylenwachs.

13. Verfahren gemäß einem der Patentansprüche 9 bis 12, **dadurch gekennzeichnet, dass** der Lackierträger aus einem oder mehreren metallischen Werkstoffen, oder aus Kunststoff, oder einer Kombination von metallischem Werkstoff und Kunststoff gebildet ist, bevorzugt ausgewählt aus Stahl, Edelstahl, Aluminium, Acrylnitril-Butadien-Styrol-Copolymeren (ABS), Polyethylen (PE) oder Polypropylen (PP).

14. Verfahren gemäß einem der Patentansprüche 9 bis 13, **dadurch gekennzeichnet, dass** der beschichtete Lackierträger ein Lackierträger gemäß einem der Patentansprüche 1 bis 8 ist.

15. Verwendung eines beschichteten Lackierträgers gemäß einem der Patentansprüche 1 bis 8 oder eines gemäß dem Verfahren nach den Ansprüchen 9 bis 14 hergestellten beschichteten Lackierträgers in einer Lackierstraße, Lackieranlage oder Lackieranlage, besonders bei der Serienfertigung von OEM-Bauteilen oder Fahrzeugen, bevorzugt zur Halterung von Bauteilen während des Lackiervorgangs, insbesondere zur Halterung von Bauteilen.

16. Verwendung gemäß Patentanspruch 15, wobei der beschichtete Lackierträger nach mindestens einem Lackiervorgang, bevorzugt nach mindestens 15 Lackiervorgängen, einem mechanischen Reinigungsschritt unterzogen wird.
